# EUROPEAN PATENT APPLICATION

(11) **EP 3 211 940 A1**
(43) Date of publication of application: **30.08.2017**
(21) Application number: 17157345.4
(22) Date of filing: 11.02.2011
(51) Int. Cl.: H04W 48/02, H04W 4/00

(54) **ACCESS CONTROL AND CONGESTION CONTROL IN MACHINE-TO-MACHINE COMMUNICATION**

(30) Priority: 12.02.2010 US 304312 P; 12.02.2010 US 303834 P; 12.02.2010 US 304355 P; 02.04.2010 US 320430 P
(62) Divisional of application: 11706675.3
(71) Applicant: Interdigital Patent Holdings, Inc., Wilmington, DE 19809 (US)
(72) Inventor: PINHEIRO, Ana Lucia, Breinigsville, PA Pennsylvania 18031 (US); PANI, Diana, Montreal, Québec H3C 1Y9 (CA); AGHILI, Behrouz, Commack, NY New York 11725 (US); DIGIROLAMO, Rocco, Laval, Québec H7K 3Y3 (CA); GAUVREAU, Jean-Louis, La Prairie, Québec J5R 6G7 (CA); ANEPU, Bhaskar M., Hummelstown, PA Pennsylvania 17036 (US); MURRAY, Joseph, Schwenksville, PA Pennsylvania 19473 (US)
(74) Representative: Awapatent AB

(57) **Abstract**

Method and apparatus for controlling cell congestion, the method comprising receiving a first indication from a wireless transmit/receive unit (WTRU) that indicates that the WTRU is a time tolerant device; determining, via an eNodeB, a first access class of time tolerant devices and a second access class of non-time tolerant devices;
determining, via the eNodeB, that preventing one or more devices that belong to the first access class from accessing a cell can prevent the cell from experiencing congestion; and sending a second indication to the WTRU that the first access class is barred from accessing the cell due to cell congestion.

## Description

### BACKGROUND

Machine to machine (M2M) communication is the communication between machines that do not necessarily need human intervention. This form of communication is expected to have applications in areas such as smart metering, home automation, eHealth, fleet management, etc. To address this potential new market, the Third Generation Partnership Project (3GPP) has started an effort to determine potential network optimizations that could lower the operational costs associated with offering these new M2M services.

As defined by 3GPP, Machine Type Communication (MTC) involves the following entities:
MTC subscriber: Some legal entity that has an agreement with the network operator to provide an M2M service through the mobile network.
MTC device: A wireless transmit/receive unit (WTRU) equipped for MTC communication.
MTC server: An entity which communicates directly with the mobile network and indirectly to MTC devices through the mobile network. It also provides an interface to the MTC user.
MTC user: A user that uses the services of an M2M server.
MTC feature: A network function that is optimized for M2M applications. These functions may be seen as features that MTC devices can possess.

These entities are linked through the network operator by two different communication scenarios: MTC devices communicating with MTC servers, with the MTC server either inside the network operator domain (see Figure 1) or outside the network operator domain (see Figure 2); and MTC devices communicating with each other through one or more network operators (see Figure 3).

M2M communications have a number of unique characteristics which may be used to optimize the usage of the operator network. These characteristics include, for example: mostly data-centric communication (voice not expected), a potentially large number of communicating terminals, a low traffic volume per terminal, a potentially low mobility for some devices, and potentially power-limited devices.

These characteristics may be grouped into MTC features, including, for example: low mobility, which includes devices which do not move, move infrequently, or stay within a limited area; time controlled, which includes devices that send or receive data during certain defined periods of time; time tolerant, which includes devices in which the information is not real time and some delay is acceptable in transmitting the data from the device to its destination; packet switched only; online small data transmission, which includes devices that are connected or online and frequently transmit small amounts of data; offline small data transmission, which includes devices that connect to the network when they need to transmit or receive data and then disconnect; mobile originated only; infrequent mobile terminated; MTC monitoring, which includes devices used to detect events which may result in vandalism or theft; offline indication, which includes devices that provide an indication when the connection between the device and the network is lost; jamming indication; priority alarm message (PAM), which includes devices that handle messages that need to have some level of priority and may be time critical; extra low power consumption; secure connection; location specific trigger, which includes devices configured to send an indication when they enter certain areas; group based MTC policing; and group based MTC addressing.

An MTC device may require any subset of these MTC features (for example, time tolerant, time controlled, and jamming indication). The MTC features associated with a device may be part of the MTC subscription information maintained by the network.

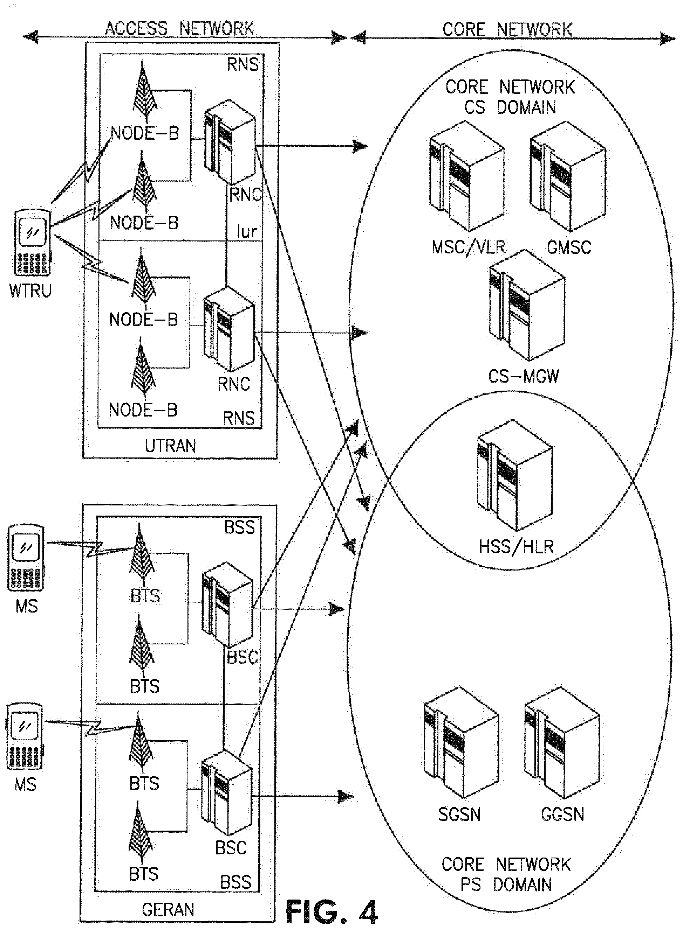

The network operator domain is divided between an access network and a core network. The core network is responsible for a number of higher layer functions, including: mobility management, call control, session management, billing, and security control. The access network is responsible for access over the wireless link, and has functions related to physical layer transmission/reception, access control, radio mobility, and radio resource utilization. As an example, Figure 4 shows a high level view of the GERAN (TDMA based) and UMTS (WCDMA based) access networks. Both access networks share a circuit switched and packet switched core network. Each Node B/BTS may be thought of as controlling cellular communications with a cell (the cell is defined by the coverage area of the Node B/BTS). The Node B/BTS broadcasts "system information" which provides the configuration details used within the cell.

One of the applications of an MTC device is metering. In a metering application, a considerable number of MTC devices may be deployed in a relatively small area and most of these devices may be connected to a single cell or very few cells. These devices may be expected to communicate with the network at predetermined times and over a period of predefined time intervals. Though the device density is high, the amount of data the devices need to transmit to the network may not be frequent or large. The mobile networks need to ensure that these devices have access during these predefined times for the duration of the required time.

### SUMMARY

A method for performing load balancing by a wireless transmit/receive unit includes evaluating a current cell load value and on a condition that the current cell load value is greater than a predetermined threshold, performing load balancing by barring the current cell.

### BRIEF DESCRIPTION OF THE DRAWINGS

A more detailed understanding may be had from the following description, given by way of example in conjunction with the accompanying drawings, wherein:

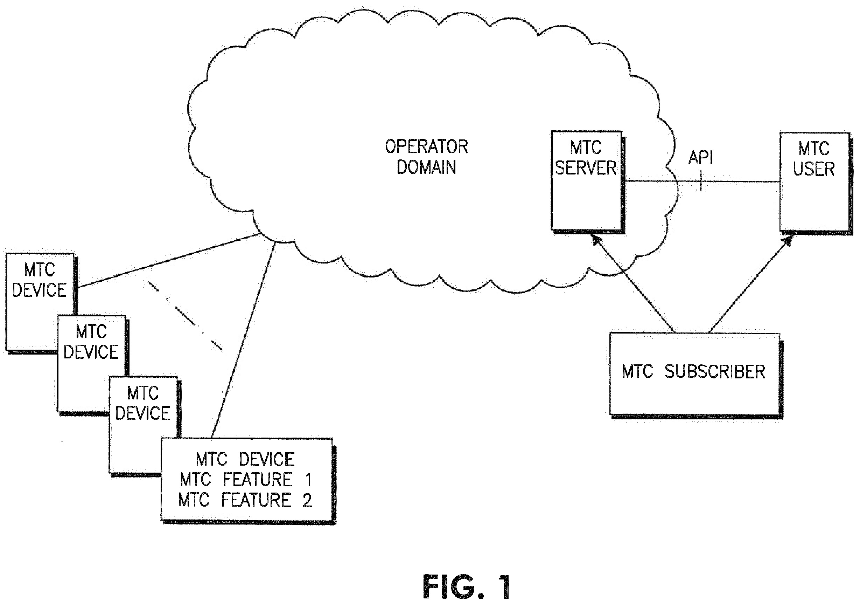

Figure 1 is a diagram of communication between an MTC device and an MTC server when the MTC server is in the operator domain;

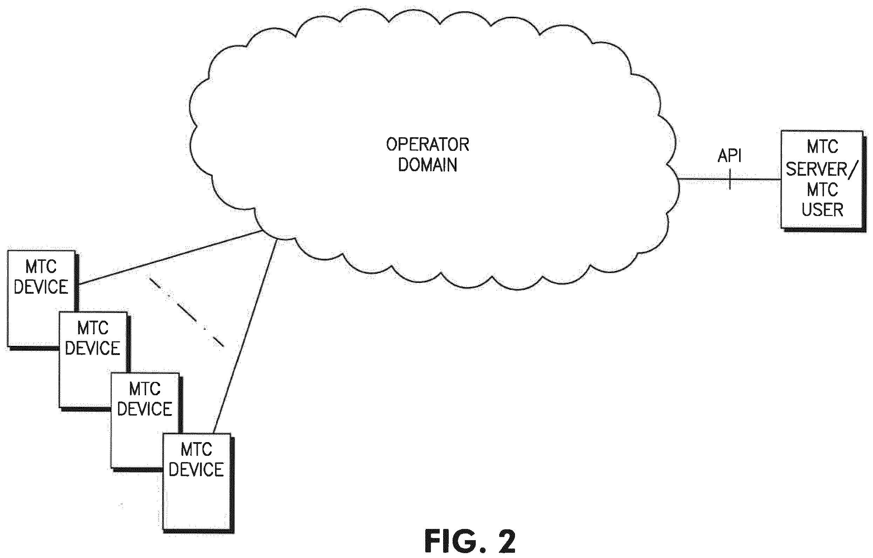

Figure 2 is a diagram of communication between an MTC device and an MTC server when the MTC server is outside the operator domain;

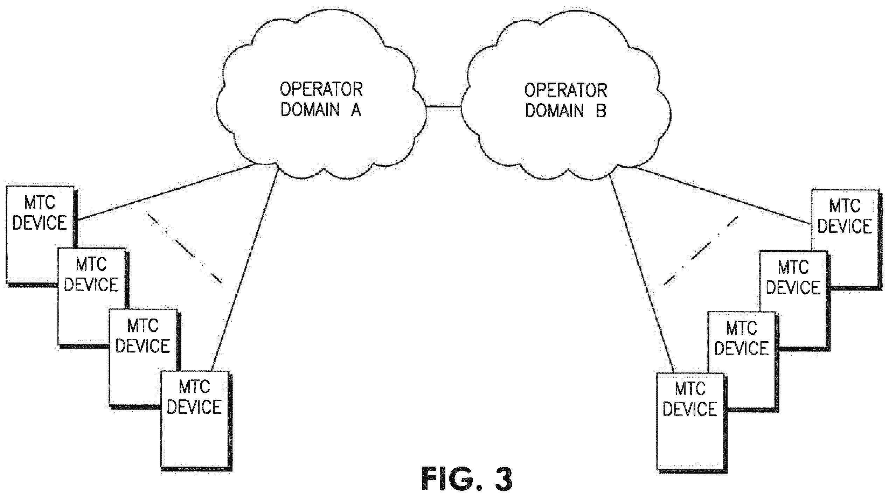

Figure 3 is a diagram of communication between two MTC devices which may be in different operator domains;
Figure 4 is a high-level view diagram of a 3GPP access/core network;

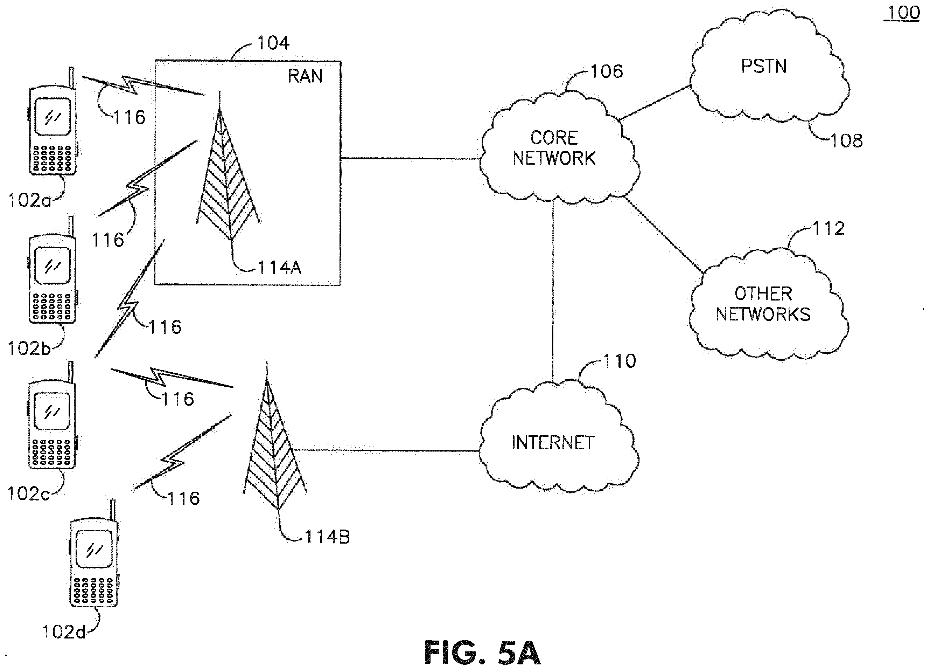

Figure 5A is a system diagram of an example communications system in which one or more disclosed embodiments may be implemented;

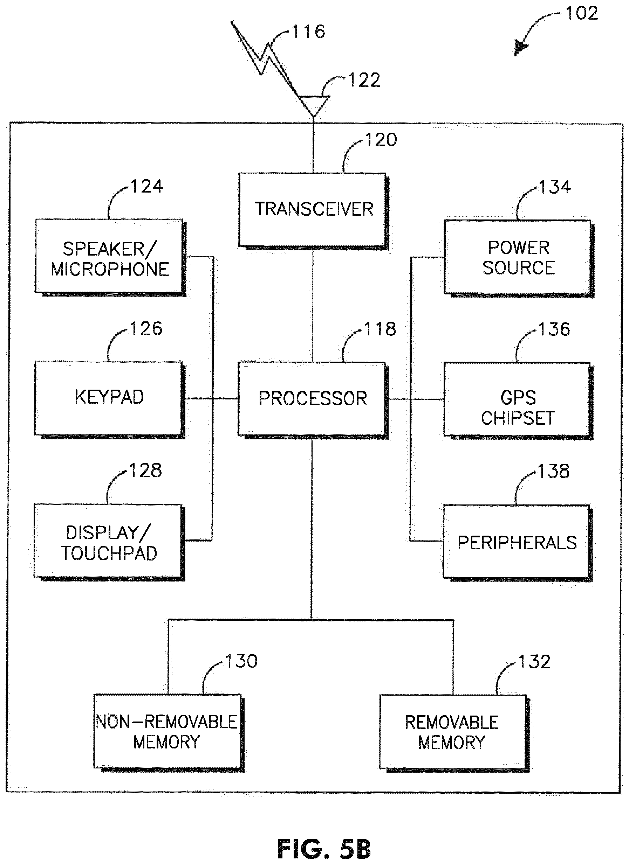

Figure 5B is a system diagram of an example wireless transmit/receive unit (WTRU) that may be used within the communications system illustrated in Figure 5A;

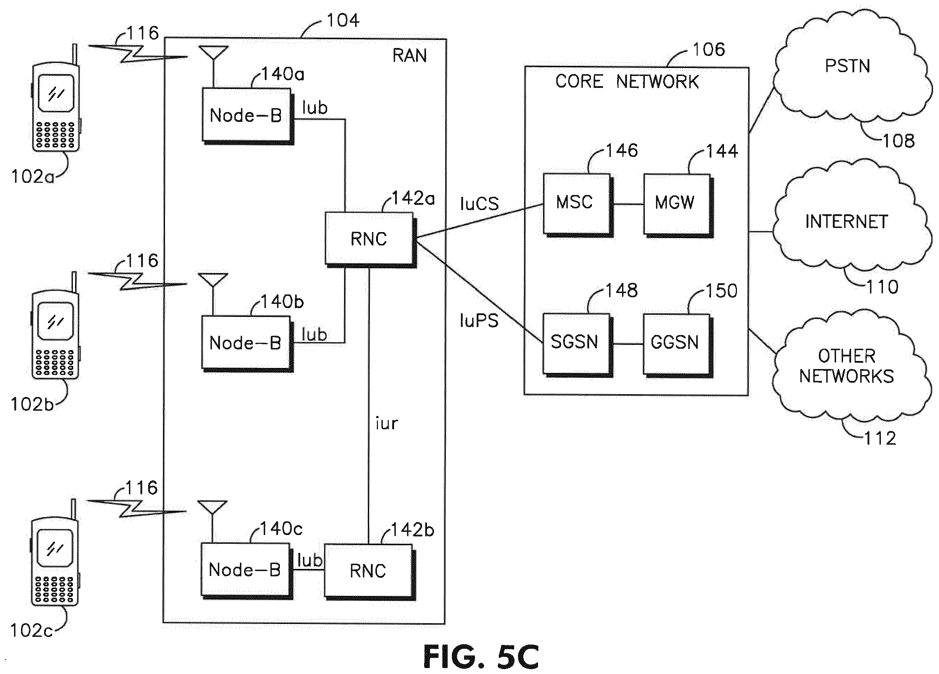

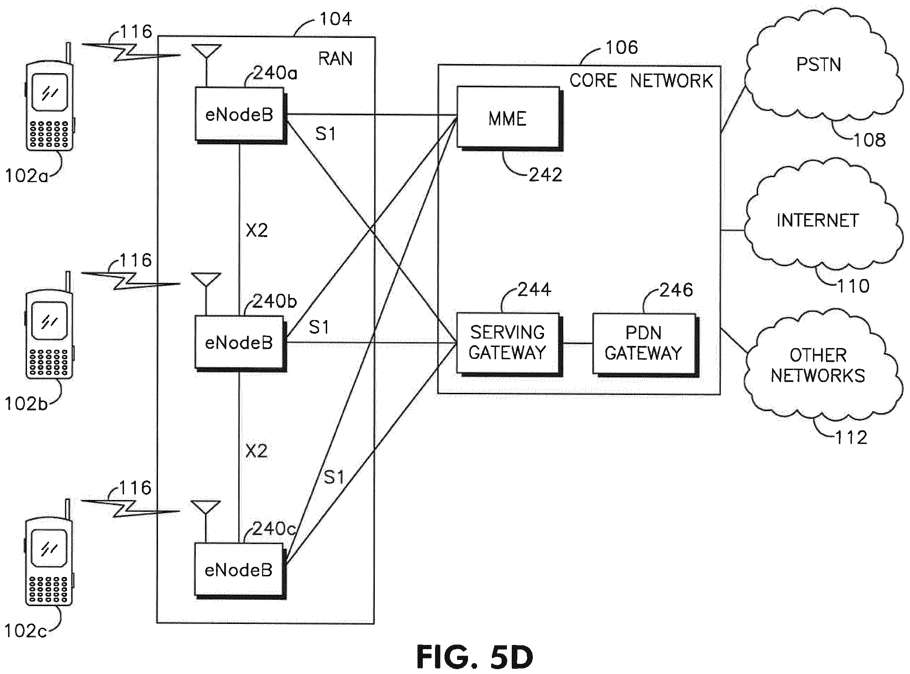

Figures 5C and 5D are system diagrams of example radio access networks and example core networks that may be used within the communications system illustrated in Figure 5A;

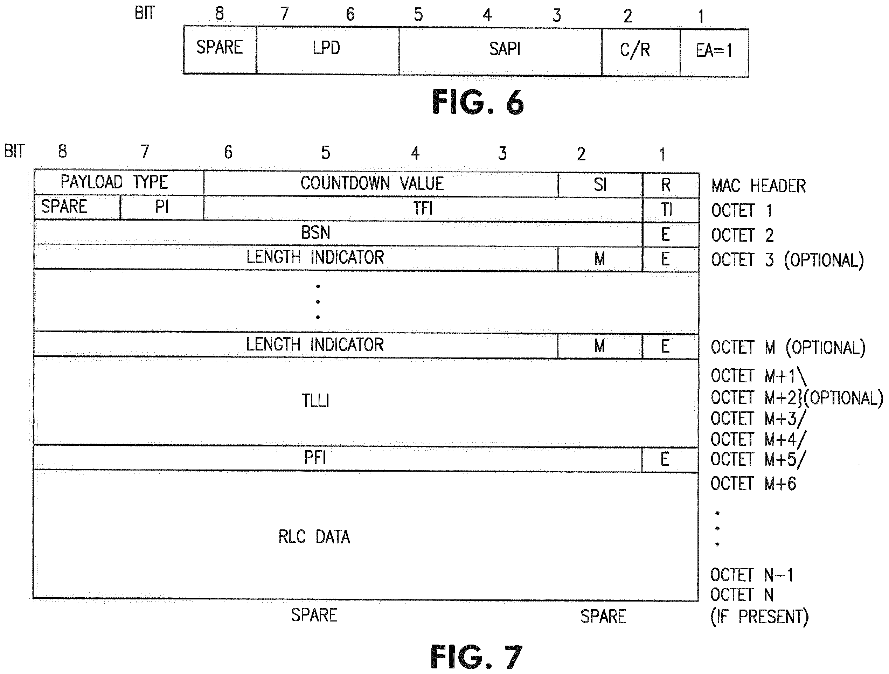

Figure 6 is a diagram of an address field format;
Figure 7 is a diagram of an uplink RLC data block with a MAC header;

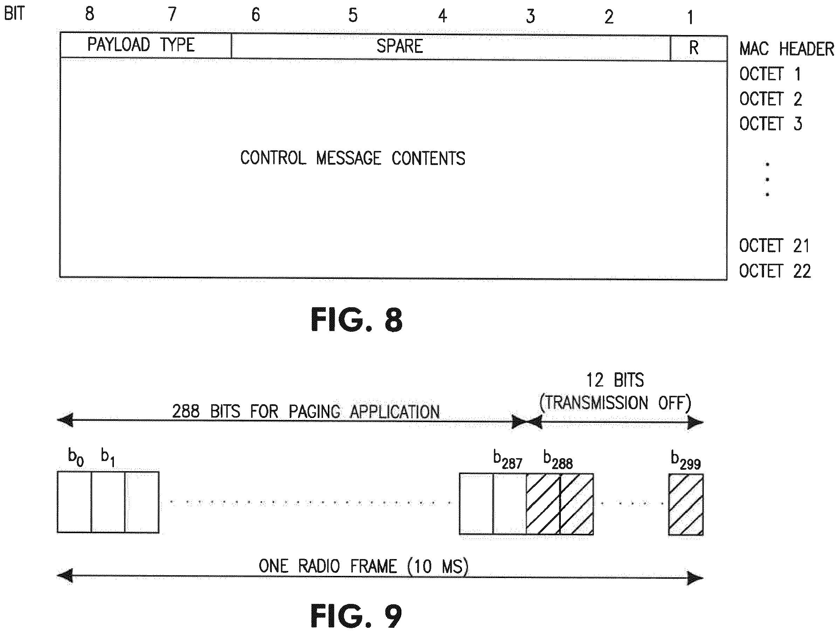

Figure 8 is a diagram of an uplink RLC/MAC control block together with its MAC header;
Figure 9 is a diagram of a radio frame showing available bits; and

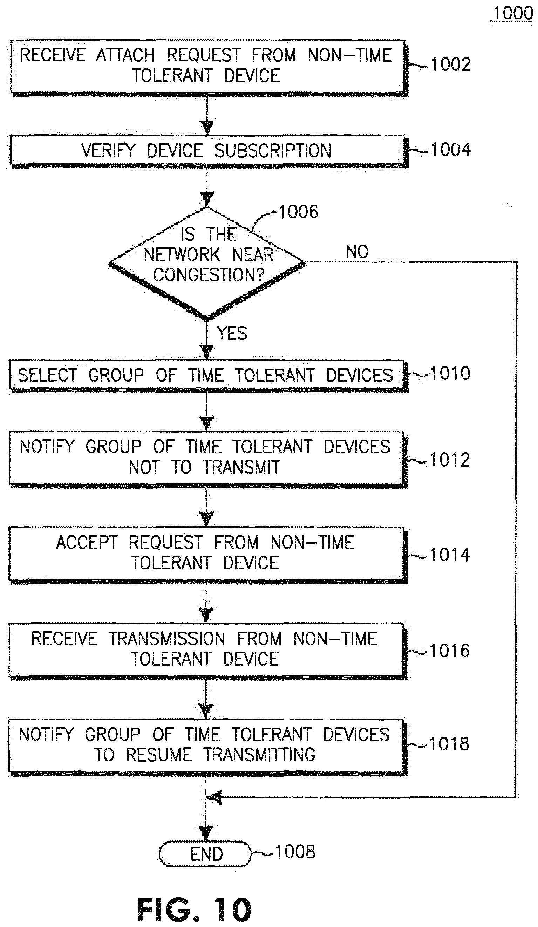

Figure 10 is a flowchart of a method for device prioritization.

### DETAILED DESCRIPTION

Figure 5A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in Figure 5A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in Figure 5A may be a wireless router, Home Node B, Home eNode B, or access point, for example, and may utilize any suitable radio access technology (RAT) for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in Figure 5A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in Figure 5A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in Figure 5A may be configured to communicate with the base station 114a, which may employ a cellular-based radio technology, and with the base station 114b, which may employ an IEEE 802 radio technology.

Figure 5B is a system diagram of an example WTRU 102. As shown in Figure 5B, the WTRU 102 may include a processor 118, a transceiver 120, a transmit/receive element 122, a speaker/microphone 124, a keypad 126, a display/touchpad 128, non-removable memory 106, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While Figure 5B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in Figure 5B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 106 and/or the removable memory 132. The non-removable memory 106 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

Figure 5C is a system diagram of the RAN 104 and the core network 106 according to an embodiment. As noted above, the RAN 104 may employ a UTRA radio technology to communicate with the WTRUs 102a, 102b, 102c over the air interface 116. The RAN 104 may also be in communication with the core network 106. As shown in Figure 5C, the RAN 104 may include Node-Bs 140a, 140b, 140c, which may each include one or more transceivers for communicating with the WTRUs 102a, 102b, 102c over the air interface 116. The Node-Bs 140a, 140b, 140c may each be associated with a particular cell (not shown) within the RAN 104. The RAN 104 may also include RNCs 142a, 142b. It will be appreciated that the RAN 104 may include any number of Node-Bs and RNCs while remaining consistent with an embodiment.

As shown in Figure 5C, the Node-Bs 140a, 140b may be in communication with the RNC 142a. Additionally, the Node-B 140c may be in communication with the RNC142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and the like.

The core network 106 shown in Figure 5C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 104 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 104 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

Figure 5D is a system diagram of the RAN 104 and the core network 106 according to an embodiment. As noted above, the RAN 104 may employ an E-UTRA radio technology to communicate with the WTRUs 102a, 102b, 102c over the air interface 116. The RAN 104 may also be in communication with the core network 106.

The RAN 104 may include eNode-Bs 240a, 240b, 240c, though it will be appreciated that the RAN 104 may include any number of eNode-Bs while remaining consistent with an embodiment. The eNode-Bs 240a, 240b, 240c may each include one or more transceivers for communicating with the WTRUs 102a, 102b, 102c over the air interface 116. In one embodiment, the eNode-Bs 240a, 240b, 240c may implement MIMO technology. Thus, the eNode-B 240a, for example, may use multiple antennas to transmit wireless signals to, and receive wireless signals from, the WTRU 102a.

Each of the eNode-Bs 240a, 240b, 240c may be associated with a particular cell (not shown) and may be configured to handle radio resource management decisions, handover decisions, scheduling of users in the uplink and/or downlink, and the like. As shown in Figure 5D, the eNode-Bs 240a, 240b, 240c may communicate with one another over an X2 interface.

The core network 106 shown in Figure 5D may include a mobility management gateway (MME) 242, a serving gateway 244, and a packet data network (PDN) gateway 246. While each of the foregoing elements are depicted as part of the core network 106, it will be appreciated that any one of these elements may be owned and/or operated by an entity other than the core network operator.

The MME 242 may be connected to each of the eNode-Bs 240a, 240b, 240c in the RAN 104 via an S1 interface and may serve as a control node. For example, the MME 242 may be responsible for authenticating users of the WTRUs 102a, 102b, 102c, bearer activation/deactivation, selecting a particular serving gateway during an initial attach of the WTRUs 102a, 102b, 102c, and the like. The MME 242 may also provide a control plane function for switching between the RAN 104 and other RANs (not shown) that employ other radio technologies, such as GSM or WCDMA.

The serving gateway 244 may be connected to each of the eNode Bs 240a, 240b, 240c in the RAN 104 via the S1 interface. The serving gateway 244 may generally route and forward user data packets to/from the WTRUs 102a, 102b, 102c. The serving gateway 244 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 244 may also be connected to the PDN gateway 246, which may provide the WTRUs 102a, 102b, 102c with access to packet-switched networks, such as the Internet 110, to facilitate communications between the WTRUs 102a, 102b, 102c and IP-enabled devices.

The core network 106 may facilitate communications with other networks. For example, the core network 106 may provide the WTRUs 102a, 102b, 102c with access to circuit-switched networks, such as the PSTN 108, to facilitate communications between the WTRUs 102a, 102b, 102c and traditional land-line communications devices. For example, the core network 106 may include, or may communicate with, an IP gateway (e.g., an IP multimedia subsystem (IMS) server) that serves as an interface between the core network 106 and the PSTN 108. In addition, the core network 106 may provide the WTRUs 102a, 102b, 102c with access to the networks 112, which may include other wired or wireless networks that are owned and/or operated by other service providers.

### RACH access control

In MTC systems, a large number of communicating terminals may be deployed in a small area. If those communicating terminals attempt to access the mobile network simultaneously, it may cause congestion in uplink (UL) access. This congestion may result in random access channel (RACH) collisions and/or unavailability of resources from the network side to serve all the terminals at the same time or an increase in interference on the network. Consequently, the terminals will perform RACH retransmissions involving a backoff mechanism and power ramp-up. This may not be desirable, because MTC devices are usually power constrained. Additionally, the downlink (DL) resources may also be limited for the network in particular scenarios.

In scenarios where a considerable number of WTRUs are connected to one cell and all of the WTRUs are expected to send data at the same time, RACH failures (a RACH failure may be due to either collisions or unavailability of resources on the network side), retransmissions, and congestion may occur. To minimize these occurrences, in one embodiment, the WTRUs may be balanced between different available resources and the network may be allowed to restrict access to certain WTRUs. A "resource" as used herein refers to any medium or resource that may be used by the WTRU or the network for communication, e.g., a cell, a physical random access channel (PRACH) resource, frequency, etc.

Even though the terminology used herein is that of UMTS and/or LTE, all the concepts are equally applicable to other wireless technologies such as LTE-A, GSM, or any other wireless technology. As an example, it is understood that if the terminology Primary Scrambling Code (PSC) is used for UMTS, this is the equivalent of Physical Cell Identifier (PCI) in LTE. It is also understood that the broadcast control channel (BCCH) and the System Information (SI) elements/segments and the Master Information Block (MIB) apply to UMTS, LTE, GSM, or any other wireless technology using a similar system information broadcast method.

When referred to hereafter, a WTRU may refer to an MTC device or a normal user. An MTC group refers to a set of MTC devices that have the same group identity (ID) or other kind of identifier. The group identifier may be based on similar functionality, requirements, or other characteristics shared by different MTC devices.

The WTRU may balance the load across various resources including, but not limited to, cells, frequencies, RATs, PRACH resources, etc., to increase the probability of successful transmission, optimize network capacity, optimize battery consumption in the WTRU, etc. The following solutions are applicable for both UL and DL load balancing. It is understood that the solutions described herein may be used individually or in any combination.

### WTRU initiated

The WTRU may autonomously determine that the current load in the cell is too high, that the current cell is experiencing congestion, or that the network is not allowing access to the WTRU. The WTRU may then determine to autonomously block the cell for UL access for a predefined period of time while still monitoring the DL, consider the cell as barred, or start measuring other cells and attempt to change cells to load balance the resource.

To autonomously determine to perform any of the load balancing actions, the WTRU may use the results of the RACH access attempts to determine whether congestion is occurring due to a high load in the cell or that the WTRU is not being given access. This determination may be made if one or a combination of the following triggers are met.
(1) The WTRU performs N consecutive failed RACH access attempts. Each RACH access attempt corresponds to the WTRU exceeding the maximum number of preambles without receiving a response. For example, the WTRU does not receive an acquisition indicator channel (AICH) response in UMTS or does not receive a random access response within the random access (RA) Response window in LTE.
   Alternatively, the WTRU performs N consecutive RACH accesses in which a response is received but no resources are allocated to the WTRU. In UMTS, this corresponds to receiving a negative acknowledgment (NACK) over the AICH. In LTE, this corresponds to receiving a random access response with a backoff indicator set.
(2) The WTRU detects a combination of N failed RACH access attempts or RACH attempts in which a response is received without any resource allocation.
(3) The WTRU receives a resource allocation, but fails the contention resolution phase N consecutive times.
(4) A RACH failure occurs N consecutive times, wherein a RACH failure includes a combination of any of the above triggers.
(5) A RACH failure occurs N times within a predefined period of time, wherein a RACH failure includes one or any combination of the above triggers. This scenario is similar to trigger (4), but the failed attempts do not have to be consecutive.

It is understood that the network may configure the WTRU or the group of WTRUs with such behavior; and N may be a predetermined value, configured by the network, signaled via broadcast channel, or may be a specific value dependent on the MTC device or group.

### Network initiated

The WTRU may receive or wait for an explicit indication from the network to block the cell from access in the UL and/or DL, consider the cell as barred, to change cells, or perform any of the actions described below in the section "WTRU behavior."

To balance the load, the network may block access to certain WTRUs form predetermined amount of time or redirect the WTRU(s) to another resource, cell, frequency, or RAT.

### Controlling access via broadcast channels

The network may explicitly bar a cell for the WTRU. This may be performed by barring the cell for all MTC devices, barring the cell for a group of MTC devices, or barring the cell for a predetermined period of time.

The cell may be barred for all MTC devices, regardless of the group, priority, or service it belongs to. This may performed by adding a new barring bit or using a reserved bit (e.g., cell reserved for MTC) for MTC devices, which may be broadcasted in the system information blocks (SIBs). WTRUs belonging to MTC devices read this bit. If the bit is set to "barred" or "reserved" and the WTRU belongs to this group or category, the WTRU considers the cell as barred. Non-MTC WTRUs may ignore this bit and continue normal operation.

The cell may be barred on a per MTC group basis and not for all MTC devices. This may be achieved by broadcasting the group identity or MTC service identity to be barred. Alternatively, if a discrete subset of MTC devices are supported and defined, a string of bits corresponding to the number of supported MTC groups may be broadcast. If the WTRU detects that the bit corresponding to its group is set, the WTRU(s) consider this cell as "barred." Alternatively, a group index may be broadcast to indicate the index of the subset of MTC groups to be barred.

Alternatively, the barring bit or the reserved bit may be set on a per access service class (ASC) basis. If a new set of access classes are defined or if the MTC devices belong to categories within existing ASC sets, the network may set the barring bit or reserved bit for each service class independently. This may be performed by adding a bit in the parameters for each ASC. Alternatively, it may be performed by broadcasting the ASC number which should be blocked.

If the WTRU determines that the barring bit or the reserved bit is set and corresponds to that WTRU, the WTRU may consider the cell as barred for T_{barred} time. Alternatively, the WTRU may treat the cell as barred for a MTC specific time, T_{barred,MTC}, which may the same for all MTC devices or may be independently set for each MTC group, service, or ASC.

Alternatively, instead of barring access to all WTRUs belonging to a group, the network may explicitly block UL access for a predefined period of time. The WTRU may stay camped on a cell or not attempt to reselect to another cell. But the WTRU is not allowed to attempt transmitting in the UL or attempt a RACH access in the UL. The WTRU may still monitor the DL for paging occasions or for DL transmissions according to the current monitoring rules. Alternatively, the WTRU may also be temporarily not allowed to monitor the DL.

The UL access may be blocked by adding a new bit to the broadcast channel to indicate that MTC devices should be restricted access. This bit may be broadcast for all MTC devices or the network may explicitly control each MTC group or category by signaling this bit per group or by explicitly signaling the group number, similar to barring the cell for MTC devices.

The access control may also be performed per access class or MTC access class. The new bit is used differently than the barring bit and is used to restrict access of the specific devices to the UL for a predetermined amount of time. This implies that the WTRU stays camped on the cell, but cannot transmit data on the UL until a predefined timer, for example T_{restrict}, expires. The timer may be broadcast or signaled to the WTRU and may be cell specific or MTC device specific. Alternatively, the WTRU may pick a random number between T_{restrict} and 0 and attempt UL RACH access when the timer expires, given that data is available. Optionally, the WTRU may start UL access following a network request, e.g., paging, even though the timer is still running.

The WTRU or MTC devices may be grouped in different access classes or MTC specific access classes. When the network wants to prevent certain WTRUs from accessing the UL, it may change the configuration of the access class to prevent the WTRU from accessing the channel. For example, this may be achieved by changing the persistency timer or the available resources, such as available signature or access slots. While the network may completely block the WTRUs belonging to an access class by not providing any resources, the network may still provide the WTRUs in that class some resources, so as to not block all users. But WTRUs belonging to a certain group of users, such as MTC device users within that access class (or any other type of special users) may use the provided information for the access classes to implicitly determine whether it should perform load balancing and perform one of the actions described below in the section "WTRU behavior." The WTRU may use the following parameters.
(1) The WTRU may check the persistence value as an indication. For instance, if the persistence value is below a threshold, the WTRU determines that load balancing should be performed. The persistence value refers to a value set by the network to control the access of the device. Before access, the WTRU chooses a random value between 0 and 1. If the chosen value is below the persistence value, the WTRU is allowed to perform access; otherwise the WTRU has to wait until the next transmission time interval to perform a new persistency check. As an example of this solution, the WTRU checks the persistence value for the corresponding MTC device, group of devices, or access service class, and if the persistence value is below a threshold, then the WTRU determines that the network must be loaded and is trying to reduce the number of devices accessing the network.
(2) The WTRU may check the number of available signature sequences or available access slots. If the number of one of these resources, or a combination of these resources is below a threshold, the WTRU may perform one of the actions described below in the section "WTRU behavior." For example, if the number of available signature sequences is below a predetermined number (M) and/or the number of available access slots is below a predetermined number (N), the WTRU may consider performing load balancing. The values of M and N are threshold values that may be configured by the network and provided to the WTRU via system information, radio resource control (RRC) signaling, or any other type of dedicated signaling.
(3) The availability of other resources provided in the RACH.

The network may broadcast a specific load indicator, explicitly indicating the network load. The load indicator may be an overall cell load indicator, a network load indicator, or a MTC group indicator and may be cell specific or device/group specific. The WTRU reads the load indicator and if the load indicator is above a threshold, the WTRU performs one of the actions described below in the section "WTRU behavior." For example, the network broadcasts the current load value in a cell and if the WTRU detects that the load value is greater than a predetermined threshold (X), it may perform load balancing. The threshold value X may be configured by the network and provided to the WTRU via system information, RRC signaling, or any other type of dedicated signaling.

### Explicitly controlling access to one or a set of WTRUs

The network may explicitly indicate to the WTRU which actions to take. For example, the network may use the RA response message to indicate to the WTRU one or a combination of the following.
(1) A bit indicating to the WTRU to stop attempting to transmit in the UL. In LTE, this may be done in the RA response message and in UMTS by using a special value of the enhanced acquisition indicator (E-AI) or the acquisition indicator (AI) by using the reserved combination of bits. This transmission restriction may be applied for a predefined period of time, either signaled by the network or predefined in the WTRU.
(2) A bit indicating to the WTRU to consider the cell as barred. In LTE, this may be done in the RA response message and in UMTS by using a special value of the E-AI or the AI by using the reserved combination of bits.
(3) A bit indicating to the WTRU to attempt connecting to a different cell or perform any of the actions described below in the section "WTRU behavior." In LTE, this may be done in the RA response message and in UMTS by using a special value of the E-AI or the AI by using the reserved combination of bits.
(4) The network explicitly redirects the WTRU to a certain frequency. This may be achieved by an explicit frequency indication in the response message or providing an index into a set of frequencies or RATs broadcast in the SIBs. In UMTS, this index may be provided via the E-AI and for LTE in the RA response message.
(5) The network may provide the WTRU with the specific cell information for the cell that the WTRU should attempt to connect to and may optionally provide a contention free resource or preamble for the WTRU to use in the other cell.
(6) The network may explicitly change the frequency priority of the cell in the message for the given WTRU.
(7) A list of neighboring information that the WTRU should measure and attempt to connect to a neighbor cell. This information may include any number of neighbor cells, all of the neighbor cells, or one specific cell. Different values may be used to indicate which neighbor cells to measure. For example, the value "0" may be used to indicate that the WTRU is to measure all of the neighbor cells, while a specific cell ID may be provided if the WTRU is to measure only one cell.
(8) A cell reselection offset to bias the cell reselection rules to a different cell is sent to the WTRU.
(9) The WTRU is explicitly signaled what behavior it should follow: bar the cell, block the cell, or attempt to reselect to a different cell. This may require a number of bits or combination of bits.

Alternatively, the network may explicitly tell the WTRU what to do via a paging message. Using the paging message allows the network to address one WTRU or a group of WTRUs simultaneously at the given paging occasions, without having to modify the SIBs and prior to the WTRU attempting a RACH access procedure. The paging message may be extended to include one or a combination of the following information.
(1) One additional bit, which when set, indicates to the WTRU to perform any of the actions described below in the section "WTRU behavior;" for example, blocking the cell, barring the cell, or leaving the cell. Alternatively, the WTRU is explicitly signaled what behavior it should follow: bar the cell, block the cell, or attempt to reselect to a different cell. This may require a number of bits or combination of bits.
(2) Redirection information, such as cell, frequency, RAT, etc.
(3) The load information for the cell, and the WTRU determines the action according to similar criteria as when the load is broadcast to the WTRU.
(4) Any of the information mentioned above for the explicit indication via a RA response.

The network may provide only the SI required by the WTRU to perform the RACH access procedure on these cells. This way, the WTRU need not spend time and energy obtaining the SI on its own, and may lead to optimizations in WTRU power consumption and reduce delay.

It is understood that the above mentioned information may also be sent to the WTRU via a different RRC message.

### WTRU behavior

Upon determining that the WTRU should perform load balancing according to any of the criteria described above, the WTRU may perform one or a combination of the following actions.
(1) The WTRU may consider the cell as temporarily barred. For example, the WTRU may add the home cell to the barred cell list for a predetermined period of time. This period of time may correspond to a network provided value broadcast specifically for this device, to the barring time currently signaled for barred cells, or to a fraction of the T_{barred} timer. It is understood that this behavior may be performed without the network explicitly setting a barred bit or a reserved bit. The WTRU may implicitly perform this action when one of the barring criteria is met. Optionally, the WTRU may also consider the whole frequency as barred.
(2) The WTRU may consider the cell as blocked. This implies that the WTRU stays camped on the cell or does not attempt to perform cell reselection, but cannot transmit data on the UL until a predefined timer, for example, T_{restrict}, expires. This timer may be broadcast or signaled to the WTRU and may be cell specific or MTC device specific. Alternatively, the WTRU may pick a random number between T_{restrict} and 0 and attempt UL RACH access when the timer expires, given that data is available for transmission. While the timer is running, the WTRU may still be allowed to monitor the DL for any paging occasions or data. Alternatively, the WTRU is restricted access in both the UL and the DL for the predefined period of time.
(3) The WTRU may autonomously de-prioritize the frequency or RAT priority of the current cell and perform cell selection or reselection on the next available frequency or RAT (according to new priority setting). For example, if the current frequency is the highest priority frequency, then the WTRU no longer considers the current frequency as its highest priority frequency, implicitly de-prioritizes that frequency, and starts measuring on the next highest priority frequency or RAT.
(4) If the WTRU is currently connected to a closed subscriber group (CSG) cell, it no longer considers this frequency as the highest priority frequency.
(5) The WTRU initiates measurements and potential cell reselection to a frequency or RAT explicitly provided to the WTRU (given that one of the solutions above is implemented).
(6) The WTRU stays camped on the cell, but is not allowed to perform a UL RACH access for a predetermined period of time.
(7) The WTRU initiates cell reselection or selection according to the prioritized rules as signaled by the network.
(8) The WTRU uses the contention free resources and immediately initiates UL RACH Access.

The WTRU may move back to the previous cell, reverse the cell selection or reselection prioritization rules, or stop considering the cell as barred or blocked when a predefined timer expires. Alternatively, this may be done by the WTRU when one or a combination of the following criteria is met: the RACH attempt on the neighbor cell(s), frequency, or RAT fails; the WTRU fails to find another suitable cell to camp on; the WTRU fails to connect to the explicitly indicated cell; the RACH access attempts fail according to one or a combination of the WTRU initiated criteria described above; or any of the network initiated criteria described above is met in the new cell.

In these situations, the WTRU may perform an additional backoff before reattempting any UL access on the old cell, if it reselects to the old cell again. Alternatively, the WTRU waits for a backoff timer to expire prior to going to back to the old cell or reversing any of the previous rules.

Alternatively, when one of the WTRU initiated or network initiated criteria described above is met, the WTRU may first perform a backoff and attempt the UL access again. If a failure is again detected, the WTRU may perform one of the load balancing actions as described above. Alternatively, the backoff value may be used as a default backoff prior to attempting the first RA preamble. It is understood that this backoff may be signaled, broadcast, or provided to the WTRU in the RA response.

### Contention on the access channel

Contention on the access channel exists in almost all types of cellular systems. There are two goals when addressing this problem: minimize the probability of collisions on the access channel and resolve a collision if one occurs.

When the devices are using GERAN access, after the synchronization to the network, the devices start decoding the cell parameters broadcast on the various SI messages. In GSM, the amount of information that the device may initially send on the RACH is limited. GSM networks typically only allowed eight bits of information to be sent on the RACH. With GPRS and EDGE, it is possible to send an 11 bit RACH. The limitations place a constraint on the amount of transmitted data on the RACH. The eight (or 11) bits contain an "Establishment Cause" and a "Random Reference Number," which together create a temporary reference identity for the device. Some of these Establishment Causes have a higher priority than the others, to make it possible for the network to prioritize resource allocation in case of congestion. An example is where two devices want to access the network, and the first device needs to perform a registration procedure, whereas the second device would like to place an emergency call. In case of congestion, the network may prioritize the second device.

The device may use a new combination of the eight (or 11) bits. This new combination identifies the device as an MTC device (and not a regular mobile station), making it possible for the network to distinguish between the MTC devices and regular mobile stations in the network.

Another approach, to combat the collision problems, is that when the device receives no answer from the network upon sending the RACH, or if it receives a "Reject" message, the device applies a backoff in addition to the already random backoff used in GSM. Alternatively, the network broadcasts (e.g., in the SI message(s)) a new, and preferably longer, backoff time that only applies to the MTC devices.

After resources have been allocated to the device, the device may use the signaling channel and send a Layer 2 frame using the GSM L2 protocol, LAPDm. In this case, in the first octet of the frame (the "address field"), the "spare" bit may be used to indicate the device type. Figure 6 shows the address field of a LAPDm frame. Another possibility is a more efficient usage of the two bit LPD field (in bit positions 6 and 7) in the address field. Although the field contains two bits (providing four code-points), there are only two values for the LPD field currently specified in the GSM standards, leaving two code-points available for this use.

Two access mechanisms are defined for the (E)GPRS access, one phase access and two phase access. In one phase access, the device is assigned a UL resource called a radio link control (RLC)/medium access control (MAC) Data Block. When using a two phase access, the device is first assigned one RLC/MAC Control Block to send control information to the network so that the network may perform a suitable assignment, and is then assigned a RLC/MAC Data Block. Figures 7 and 8 illustrate the two different blocks.

If the network allocates UL resources for the device using one phase access, the device may use the spare bit in octet 1 of the UL RLC/MAC Data Block (in bit position 8) to indicate to the network that it is an MTC device.

If the network uses a two phase access, the device may then use the "spare" field in the MAC header of the UL RLC/MAC Control Block (in bit positions 2-6) for the same purpose. It is noted that there are five available spare bits and that any one of the spare bits may be specified for this particular use.

Alternatively, the device may request a two phase access and after receiving the assignment of the Control Block, send a "Packet Resource Request" message to the network where it may then indicate its MTC type.

In UTRAN networks, devices use the RACH to gain access to the network for a number of possible reasons, including initial access (to register with the network) or for limited UL data transfer for devices that are in a CELL_FACH state. The RACH mechanism is similar to that used in GERAN. The device first performs an acquisition phase followed by a message transmission phase. Contention may occur during the acquisition phase, where multiple devices attempt an acquisition request. Devices select a PRACH scrambling code, an access slot, and a signature sequence to send a RACH preamble. The RACH preamble includes a repeated set of signature sequences. If the network detects that more than one device has issued a RACH access, it may choose which device to acknowledge by sending NACKs to the others.

To provide special treatment to the MTC devices, the network would need to know that the acquisition request is from an MTC device. This may be difficult to accomplish in WCDMA UTRAN networks, because the acquisition and request phases do not rely on physical device identities. Instead, the devices send a form of local identity derived from the selected PRACH scrambling code, the access slot chosen for transmission, and the signature sequence chosen to send the RACH preamble. The network ACKs or NACKs the acquisition request through the AICH. The response is tied to the request, so that devices may determine ownership (i.e., whether the ACK is intended for the receiving device). The DL scrambling code is tied to the UL scrambling code used for the acquisition request, and the time of the response is a fixed delay from the acquisition request. The network may respond to multiple devices on the AICH by echoing the transmitted signature sequence in the response message.

Several options may be possible to assist the network in determining whether the acquisition request is from an MTC device.
(1) The device may use a special combination of signature sequences. For example, rather that repeating the same 16 bit signature sequence 256 times, the device may repeat the 16 bit sequence 128 times followed by an inverted 16 bit sequence another 128 times.
(2) The device may append an MTC indication at the end of the repeated signature sequences. For example, by adding one bit to denote an MTC device. This appended sequence may be repeated if necessary to assist in its detection. Alternatively, the signature sequence may be repeated K times at the end of the preamble. The presence of these additional repetitions may indicate that the request is from an MTC device. The system may delay the scrambling code used for the PRACH message to take into account the additional bits sent after the preamble.
(3) After receiving the acquisition response, the MTC device may send an MTC indication using a one slot message (rather than a 10 ms or 20 ms message). The network may use this indication to assess whether or not to allow the device to continue (by sending another ACK) or not (by sending a NACK). The network confirmation may be sent in a DL message. Alternatively, the device and network may negotiate using a specific signature sequence to carry the response. For example, the MTC device may request that the network response come in the acquisition response message using signature sequence N. The network may use an implicit ACK or explicit NACK to send the confirmation. If the confirmation message is a NACK, the device abandons its transmission; otherwise, it may send the message. It is noted that other WTRUs and devices that transmitted on signature sequence N would also receive the NACK and would take this as an indication to back off and attempt transmitting again after the backoff period expires.
(4) In the acquisition response, the network may include an indication that the RACH resources are to be used by non-MTC devices (for example, by including an indication in the reserved part of the AICH transmission). Alternatively, the network may use one of the unused signature patterns to send this indication. In response, the MTC device may send a one slot message indicating that it is releasing the resource, allowing the network to return that resource to the RACH pool.

### Time tolerant and time controlled access

In M2M communications, there are some use cases where the data transmission is time tolerant, i.e., the information is not real time and some delay is acceptable in transmitting the data from the device to its destination. One example is the case of smart metering: measurements are made and may be transferred to a server with certain periodicity (e.g., once a day), but it is not required that the measurements be transmitted at a specific time. There is some flexibility on the time when the measurements may be transmitted. To optimize the network operation taking into account this requirement, the network may schedule the transmissions at times when the network load is very low, for example.

A related MTC feature is the time controlled feature, and is intended for devices that are willing to have their communications "controlled" by the network operator, for example, in exchange for lower communication costs. Communication to and from a time controlled device is restricted to predefined access periods. It is noted that a device may be time controlled, but not strictly time tolerant. For example, a device may access the network during the assigned access periods, but during this period, the communications may not be delayed or deferred.

As these requirements are not typically associated with human-to-human communications, the access network and core network may have difficulty meeting these requirements. The following issues need to be addressed for time tolerant and time controlled devices: access restrictions; limiting data transfer of time tolerant devices; determining when to restrict access, limit data transfer, or change the access periods; signaling new access periods to time controlled devices; and determining the network load by time tolerant devices.

### Access restrictions

Access restrictions include restricting access of MTC devices to the network, by using modified barring and reserved techniques. Access restrictions may be implemented at any number of levels: at the core network, at the radio access network, or at the MTC device. These approaches make the cells appear "off-limits" for the MTC devices by broadcasting an "off-limits" indication. For UTRAN systems, this may be achieved by the cell broadcasting that it is barred or by barring a group of devices.

Access restrictions may be needed when a time controlled device attempts to access the network outside of its access window or when a time tolerant device wants to access the network and the network has decided that it would prefer to delay the transmission. The access restriction may be achieved through the core network by rejecting registration requests or location area update messages from the devices. But this solution does not prevent the MTC device from using resources of the access network.

The cell may broadcast that it is barred or reserved to the MTC devices. This information may be carried in the cell's SI. In UMTS, this information is carried in SIB 3. If a cell is marked as barred or reserved, a device will not attempt to camp on the cell, thereby preventing it from initiating a connection request with the access network. The Node B may transmit the barred or reserved indications dedicated to MTC devices, which may be useful when the load in the cell is high and the network wishes to limit all MTC transmissions. Alternatively, the network may use multiple indications to tailor the access restrictions to a certain subset of devices (e.g., in case not all the devices have the same access periods). The network would be responsible for notifying the Node Bs about when to dynamically start and stop the access restrictions.

Alternatively, the devices may be grouped into access classes, and the Node B may bar specific access classes. Although the general concept of access classes is already present in UMTS systems, it may be modified or extended by expanding the number of access classes and having the network dynamically start and stop the barring per access class.

In some cases, it may not be efficient to continually and dynamically alter the "off-limits" indication to track the access periods of each MTC device, as this would require a change in the SI. One possible solution is to have the Node B only send an activation or deactivation order in the SI, but leave the access decision to the devices based on some stored information.

For example, a Node B signals that access restrictions are activated. Before making an access attempt, a device first determines whether access restrictions are enabled. If not, the device may send the access request. If the access restrictions are enabled, the device retrieves the access period information and evaluates if it is within the "allowed" period. If yes, the device sends the access request. If not, the device defers until a later time.

In one special case, certain MTC devices may be required to follow access period restrictions. These devices may be preconfigured to access the channel only at predetermined periods of time. But the network may change these predetermined periods of time through signaling.

### Limit data transfer

One requirement of the time tolerant feature is that the network may limit the amount of data that a device may transmit. If the device uses a request/grant mechanism for UL access (e.g., HSUPA or LTE), the network may limit the grants given to devices classified as time tolerant. The network determines its load and the UL grant is defined based on the requests from the device and the current network load. If the device is time tolerant, then the network may not give grants for that device for a given period of time. Alternatively, the network may allocate a small amount of resources to the device.

For the time controlled feature, the network may deny requests if a request is made outside of the access period. One option is to achieve this via the grants for HSUPA and LTE - if the request is made outside of the predefined time period, then the network may not provide grants to the given device. Another option is to reject packet data network (PDN) connectivity or attach requests that are outside of the access period.

In a UMTS system, UL access may also be based on a random access mechanism (using a RACH). The RACH mechanism uses a contention-based acquisition phase followed by a message transmission phase. It is noted that the network does not know the identity of the devices during the acquisition phase. In one solution, the network may define MTC specific RACH parameters (that are broadcast in the SI) and RACH procedures. For example, the MTC devices may send an indication in the RACH preamble that they are time tolerant. If necessary (e.g., to control the load), the network may respond with a special NACK message in the AICH, to indicate to the MTC device to defer transmission for some period of time. The network may also use the AICH to provide an indication of this time period.

If the identity of the MTC device is included in the RACH preamble, the network may verify if this attempt has been made inside one of the device's access time period windows. If not, the network may respond with a NACK, provide an indication of when the MTC device may reattempt transmission, or update the device about a modified access time period or modified load thresholds.

Alternatively, if a device determines that it is outside of its access time period window or if the current load in the network is above the threshold for communication, the device may back off for a predetermined period of time, and attempt to access the network after that time period elapses. This procedure may repeat until either the device is able to transmit (i.e., the load is lower than the threshold or the access time period window allows) or the device has attempted more than a preconfigured number of times. This preconfigured number of times is application dependent and the objective is to place an upper bound on the delay.

### Network triggers

The use of network triggers with time tolerant and time controlled devices includes triggering the network to signal new access windows or load thresholds. To enable the operation of the time tolerant and time controlled features, the network may need to determine when to: alter the access periods of the MTC devices, activate or deactivate access restrictions, activate or deactivate limited data connectivity, or alter the load thresholds (for the time tolerant feature).

Numerous triggers may be used for this determination, including, but not limited to: load in the UL, load on the RACH, measured noise rise on the UL, or historical trends. When using the load in the UL, the load in the network may be based on the number of users currently in the cell (registered, in connected mode, in idle mode, etc.), the total throughput supported by the cell, or some other method. Using the load on the RACH may be based on the number of observed collisions, the number of free slots in the RACH, etc. The network may measure the noise rise on the UL by measuring the received power and comparing it to thresholds to determine load ranges. When using historical trends, the network may know, for example, that certain time periods of the day are heavily used by subscribers for downloading e-mails. Based on this knowledge, the network may decide to favor these subscribers during these time periods.

### Signaling access periods and load thresholds to MTC devices

Both the time tolerant and time controlled features require mechanisms for the network to communicate new configuration details to the MTC devices, namely modified access periods and load thresholds. This information may be signaled by the core network using one or a combination of the following approaches.

In response to an MTC device initiated communication, e.g., a registration request, a location area update, or a PDN connectivity request, the new access period or load threshold information may be included as a field in the accept or reject command response from the core network. In UTRAN, the MTC configuration information may be carried in a GPRS Attach Accept or Reject message, which is carried in a Direct Transfer message between the SGSN and RNC, and then in the Downlink Direct Transfer message between the RNC and the MTC device.

Direct Transfer may be used to send the new configuration message in a core network initiated message. In UTRAN, the new MTC configuration information may be included as a field in the Iu Release command or a Paging command. These messages are carried in the Direct Transfer message between the SGSN and RNC, and then in the Downlink Direct Transfer message between the RNC and the MTC device.

Direct Transfer may be used to send new configuration information in a new core network message (for example, MTC ReConfiguration). This new message may be carried in the access network through a Direct Downlink Transfer RRC message.

Alternatively, the core network may provide the MTC configuration to the RNCs, and have the RNCs distribute this information to the MTC devices. This may be achieved by using a new RRC-like message or appending the MTC configuration information to an existing RRC message.

### MTC device load determination

The time tolerant feature requires that the MTC device be able to determine the network load, including signaling changes in the access time period window and/or load thresholds. There are three proposed ways that the device may determine the network load:
(1) The device observes or measures the channel usage in the cell and determines the network load based on the measurements. This option may be difficult to implement, because the device would have to listen to the channel and make some estimations based on the energy observed. Due to power control, the physical location of the device may effect the measurements, and the final conclusion may be inaccurate.
(2) The device assumes a certain load based on RACH collisions (e.g., a number of ACKs or NACKs received in the AICH channel). This option requires the device to transmit on the RACH channel and wait to see if there is a collision. The device may back off for a longer period of time in case a collision occurs. But, in case the network is already congested, this option would increase the congestion on the radio access channel.
(3) The network signals the network load to the device. Based on this information, the device decides whether or not to transmit based on a preconfigured load threshold. For example, the network may broadcast the network load per cell in the broadcast channel. Before the device accesses the network, it reads the broadcast channel and if the load is higher than its preconfigured load threshold, the device will not transmit.

### Signaling consestine control

MTC related signaling congestion may be caused by a malfunctioning in the MTC application and/or MTC server, an external event triggering large numbers of MTC devices to attach or connect at the same time, or recurring applications that are synchronized to exact time intervals (e.g., every 15, 30, or 60 minutes).

Signaling network nodes that may suffer from MTC related signaling congestion include all PS domain control plane nodes and gateways. The SGSN/MME is vulnerable to congestion with large scale attach requests and with connection requests, because this node has a relatively large load per connection request. GGSNs/PGWs are also vulnerable to congestion, because M2M applications may often use a dedicated access point name (APN) which terminates at one GGSN/PGW. All connection requests for that particular application will then have to be handled by a single GGSN/PGW.

To combat signaling congestion, network nodes may be able to reject registration (i.e., attach) or PDN connectivity requests. The node may block the traffic of the particular MTC application(s) causing the congestion, without restricting non-MTC traffic or traffic from other MTC applications that are not causing a problem. A dedicated APN or a MTC Group Identifier are possible identifiers to indicate particular large scale MTC applications. One challenge is how to identify applications that are causing recurring signaling congestion (e.g., mail applications, buddy finders, etc.). Low priority applications may also be restricted.

Signaling congestion should be resolved so that rejecting PDN connectivity requests or attach requests does not result in a MTC device immediately re-initiating the same request. The network should be able to instruct MTC devices not to initiate a similar request until after a backoff time. This backoff time may also be used to instruct MTC devices with recurring applications to change their timing of attach or PDN connectivity requests.

There are several possible ways to reject connection requests, including, but not limited to: rejecting connection requests per APN, rejecting connection requests and attach requests per MTC group (e.g., based on an MTC group identifier), rejecting connection requests and attach requests for time tolerant (i.e., low priority) applications, or providing a backoff time to the MTC device.

### Implementing the backoff and related procedures

Existing solutions offer methods to reject an attach message when the MTC device attempts to connect (attach) to the network. But these solutions do not address the extra signaling that may result when devices that are already attached to the network desire to transmit data. To avoid extra signaling during periods of high congestion, the network may notify MTC devices not to transmit for a specific period of time, e.g., during periods of congestion or when there is likely to be congestion.

To avoid having a MTC device re-initiate a PDN connectivity request or an attach request immediately after receiving a rejection to an earlier request, the SGSN/MME may provide a backoff time to the MTC device in the reject message. If the GGSN/PGW originally sent the reject message, the SGSN/MME may append a backoff time to the reject message. The MTC device may not re-initiate a similar connection or attach request until after the backoff time has expired. The network may be able to enforce this backoff period by rejecting any attach or PDN connectivity requests from a MTC device with a still-running backoff timer.

Providing a backoff time may also address the issue of recurring applications (e.g., applications that attempt to transmit every 15, 30, or 60 minutes). If the MTC device identifies the recurring applications, it may delay connection requests or attach requests for these applications with the backoff time.

### Backoff based on NAS signaling

A non-access stratum (NAS) message is sent to devices that are already attached to the network, notifying these devices not to transmit for a specific period of time. In one embodiment, the SGSN/MME/VLR sends a NAS message with a backoff time to MTC devices in a given MTC group. This message notifies the devices in the MTC group not to transmit for a specific period of time (the backoff period). This message may be sent when the SGSN/MME/VLR rejects a connectivity request or an attach request targeted at a particular MTC group, or after the SGSN/MME/VLR detects a possible congestion situation. The message may be sent as a group based message to all attached devices in the group.

Once the NAS message is received by a given MTC device, the device may be in RRC idle mode or in RRC connected mode in UMTS. If the device is in RRC connected mode, receiving the NAS message may implicitly force the device to move to RRC idle mode and start the backoff logic. If the device is in RRC idle mode, then the backoff logic starts.

Alternatively, the NAS message may be sent as multiple unicast messages, each addressed to a specific device in the group. The devices may not initiate communication with the network until the backoff timer expires. To avoid network overload when the backoff timer expires, random backoff timers may be assigned to different devices from the same MTC group.

Alternatively, the network may signal a parameter that may be used by the MTC device to determine the backoff period. The parameter and function used by the device should result in a randomized backoff time.

### Backoff based on load

The network signals the load and the devices decide when to transmit. Optionally, the network signals a flag allowing or disallowing devices to transmit. The decision to transmit may be based on the MTC group to which the device belongs and/or the priority of the data to be transmitted. Signaling the load may be via broadcast channel or dedicated signaling to each MTC device or group of devices. To avoid signaling congestion, the devices calculate a backoff time that is used to delay the start of their transmissions. Alternatively, the backoff time may be signaled together with the load. To avoid network overload when the backoff timer expires, random backoff timers may be assigned to different devices from the same MTC group.

Optionally, a congestion flag may be used to determine the permission to transmit. The congestion flag applies to all groups or to one or more specific MTC groups. A device in a group may transmit when the flag is clear. Optionally, the device may apply a random backoff before transmitting when the flag is clear.

Optionally, all devices that see the congestion flag wait until they receive a dedicated NAS message from the network indicating that it is permissible to transmit. Using this message allows the network to select which devices are allowed to transmit and therefore stagger the transmission of individual MTC devices or device groups.

This solution may apply to MTC devices that are attached or not attached to the network.

### Backoff based on paging channel sequence

When using this type of backoff, devices are notified to backoff in the Paging Channel. In GERAN, based on the device's mode as well as the Network Mode of Operation (NMO), the MTC device may decode one or more Paging Channel(s) as follows.

If the MTC device is decoding the GSM (CS) Paging Channel, the network may use Paging Request Type 1, 2, or 3. If a Type 1 paging request is used, the network may page a maximum of two mobiles by using either the International Mobile Subscriber Identity (IMSI) or the Temporary Mobile Subscriber Identity (TMSI). Using a Type 2 paging request, the network may page up to three mobiles where only one of the used identities may be the IMSI (i.e., either one IMSI and two TMSI, or three TMSI). For a Type 3 paging request, up to four mobiles may be paged using the TMSI only. In all these cases, using a predefined bit sequence of TMSI or IMSI (e.g., all "ones" or all "zeroes") is proposed. This predefined sequence notifies an MTC device to backoff and may be ignored by non-MTC devices.

If the MTC device is decoding the GPRS (PS) Paging Channel, the network may page the device by sending the Packet Paging Request message containing either the TMSI, Packet Temporary Mobile Subscriber Identity (P-TMSI), or IMSI. Similar to when the GSM (CS) Paging Channel is used, a predefined sequence of bits may be used instead of the actual identity. This predefined sequence notifies an MTC device to backoff and may be ignored by non-MTC devices.

In UMTS, the Paging Indicator Channel (PICH) notifies the MTC device when to wake up and listen to the paging channel (PCH). The PCH then contains the P-TMSI or IMSI of the device. A predefined sequence may be used instead of the P-TMSI or IMSI, to notify an MTC device to backoff and may be ignored by non-MTC devices.

Optionally, the network may use the 12 bits in the PICH which are currently "reserved for future use" as shown in Figure 9. If a given sequence is found, the MTC device knows to backoff. These bits may be ignored by non-MTC devices.

In LTE, the WTRU wakes up periodically at predefined slots in a given frame based on its paging group and its discontinuous reception (DRX) cycle to listen to the physical downlink control channel (PDCCH). If the WTRU detects an allocation associated with the paging radio network temporary identifier (P-RNTI) in the PDCCH, then a paging message is present in the associated allocation in the physical downlink shared channel (PDSCH). The MTC device then looks for a specific identifier or predefined sequence in the paging message. If this predefined sequence is present, this notifies the MTC device to back off and may be ignored by non-MTC devices.

Alternatively, a new radio network temporary identifier (RNTI), the Backoff-RNTI (B-RNTI), may be used to inform all MTC devices to back off transmission. Once a WTRU detects an allocation associated with the B-RNTI in the PDCCH, a backoff message is present in this allocation. This backoff message may provide backoff parameters, such as the backoff period duration, an additional random backoff period parameter, or inform the WTRU whether this backoff applies to specific MTC groups.

In all scenarios, the backoff needs to be communicated to the device. The backoff may be preconfigured in the device or optionally sent in one of the NAS Accept signaling messages, which may include any one of: attach accept, routing area update (RAU) accept, tracking area update (TAU) accept, or location update (LU) accept. To avoid network overload when the backoff timer expires, random backoff timers may be assigned to different devices from the same MTC group. If the network is configured to send the same backoff timer or parameters to all the devices in the NAS Accept message(s), the devices may apply a random backoff timer in addition to the one signaled by the network to minimize the chances of collisions or congestion for later attempts.

To differentiate the MTC groups, different sequences and different backoffs may be defined for different groups.

### Device prioritization

The network knows which device groups are time tolerant and which device groups are not time tolerant. When the network receives a request from a device which is not time tolerant, it may inform the time tolerant devices not to transmit for a specific period of time, avoiding congestion and being able to provide access to a device that requires immediate connection (i.e., the highest priority devices).

Figure 10 is a flowchart of a method 1000 for implementing a device prioritization procedure. The network receives a request (either an attach request or a PDP context activation request) from a device that does not support the time tolerant feature (step 1002). The network verifies the device subscription and notes that the device is not time tolerant (step 1004).

A determination is made whether the network is near congestion (step 1006). If the network is not near congestion, then the method terminates (step 1008) and the request from the non-time tolerant device may be accepted.

If the network is near congestion (step 1006), the network selects a group of time tolerant devices that are currently attached (step 1010). The network notifies the group or groups of time tolerant devices not to transmit (step 1012).

The network accepts the request from the non-time tolerant device (step 1014) and receives the transmission from the non-time tolerant device (step 1016). The network then notifies the group or groups of time tolerant devices that they may resume transmission (step 1018) and the method terminates (step 1008).

### Conditionally attached

The SGSN/MME/VLR may accept an Attach Request of a specific MTC device but impose a backoff for transmission. The network informs the device that its registration attempt is conditionally accepted by indicating that in the Accept messages for registration (i.e., in the attach accept, RAU accept, TAU accept, or LU accept message). This may be achieved by either using available code-points in the already existing information elements, for example, Attach Type, Update Type, or EPS Update Type, or by introducing a new information element that conveys this condition. The backoff may either be a value selected and transmitted by the network or a parameter transmitted by the network that the device uses to calculate the backoff value. Optionally, the device may have a preconfigured backoff.

### Resuming communication after backoff

To avoid congestion once the backoff period expires for a large group of MTC devices, an additional random backoff period may be generated by the WTRU. The range of this additional random backoff period may be sent as part of the backoff parameters.

Although features and elements are described above in particular combinations, one of ordinary skill in the art will appreciate that each feature or element may be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

### Embodiments

1. A method for performing load balancing by a wireless transmit/receive unit (WTRU) includes evaluating a current cell load value and on a condition that the current cell load value is greater than a predetermined threshold, performing load balancing by barring the current cell.
2. The method of embodiment 1, wherein the barring includes adding the current cell to a barred cell list for a predetermined period of time.
3. The method of embodiment 2, wherein the predetermined period of time corresponds to any one of: a network provided value specifically for the WTRU, a barring time for barred cells, or a fraction of the barring time for barred cells.
4. The method of any one of embodiments 1-3, wherein the current cell load value is determined by the WTRU and includes any one of: a predetermined number of consecutive failed random access channel (RACH) access attempts; a predetermined number of consecutive RACH accesses in which a response is received but no resources are allocated; a predetermined number of a combination of failed RACH access attempts or RACH accesses in which a response is received but no resources are allocated; a predetermined number of consecutive contention resolution phase failures; a predetermined number of consecutive RACH failures, wherein a RACH failure includes a combination of failed RACH access attempts, RACH accesses in which a response is received but no resources are allocated, or contention resolution phase failures; or a predetermined number of RACH failures within a predetermined period of time.
5. A WTRU includes a processor configured to evaluate a current cell load value and on a condition that the current cell load value is greater than a predetermined threshold, perform load balancing by barring the current cell.
6. A method for identifying a WTRU as a machine type communication (MTC) device includes sending an identifier from the WTRU to a network. The identifier includes any one of: a bit combination on a random access channel (RACH) transmission, including an establishment clause value; a bit in an LAPDm frame; a bit in an uplink (UL) radio link control (RLC)/medium access control (MAC) data block; a bit in an UL RLC/MAC control block; an indicator in a packet resource request message; a combination of signature sequences in a RACH preamble; an indicator appended to an end of repeated signature sequences in the RACH preamble; a one slot MTC indication message; or an indicator in an acquisition response.
7. A method for a WTRU to identify itself as a MTC device to a network includes sending an identifier from the WTRU to a network. The identifier includes any one of: a bit combination on a RACH transmission, including an establishment clause value; a bit in an LAPDm frame; a bit in an UL RLC/MAC data block; a bit in an UL RLC/MAC control block; an indicator in a packet resource request message; a combination of signature sequences in a RACH preamble; an indicator appended to an end of repeated signature sequences in the RACH preamble; a one slot MTC indication message; or an indicator in an acquisition response.
8. A method for restricting access by a set of devices to a network includes barring the devices from a cell. The barring includes any one of: the cell broadcasting in system information that it is barred or reserved; the cell broadcasting that a specific access class of devices are barred; or a Node B sends an activation or deactivation order in the system information, and the devices determine whether to transmit based on the order.
9. The method of embodiment 8, wherein the set of devices includes any one of: one or more MTC devices; one or more devices belonging to a specific group, wherein the specific group includes any one of: belongs to a specific user, is located in a specific cell, is located in a specific location area, is located in a specific registration area, is located in a specific tracking area, or supports a specific feature; or one or more time tolerant devices, wherein a time tolerant device is a device whose data transmission is not real time and may be delayed.
10. A method for restricting access by a device to a network includes limiting data transmission capabilities of the device. The limiting includes any one of: the network sending a predefined access time period to the device, wherein the device only transmits within the predefined access time period; limiting grants given to the device, on a condition that the device is time tolerant, wherein a time tolerant device is a device whose data transmission is not real time and may be delayed; or the device identifies itself to the network as being time tolerant, and the device receives a defer transmission instruction from the network.
11. The method of embodiment 10, wherein on a condition that the device attempts to transmit outside of the predetermined access time period, the network signals a new predetermined access time period to the device.
12. The method of any one of embodiments 10-11, wherein the defer transmission instruction includes any one of: a negative acknowledgement; an indication of when the device may reattempt transmission; or an updated predefined access time period.
13. The method of any one of embodiments 10-12, wherein the predetermined access time period is sent to the device in response to a message received from the device, wherein the response includes any one of: a general packet radio service attach accept message; a location update message; a direct transfer message; an Iu release command; or a paging command.
14. The method of any one of embodiments 10-13, wherein the device includes any one of: a MTC device; a device belonging to a specific group, wherein the specific group includes any one of: belongs to a specific user, is located in a specific cell, is located in a specific location area, is located in a specific registration area, is located in a specific tracking area, or supports a specific feature; or a time controlled device, wherein a time controlled device is a device configured to transmit only during a predetermined access time period.
15. A method for controlling congestion in wireless communications includes signaling a device on a condition that a congestion condition exists. The signaling includes any one of: rejecting an attach request or a connection request from the device; rejecting a location update request; signaling a backoff period of time to the device; or accepting a request from the device and imposing a transmission backoff period of time for the device, wherein the backoff period of time is signaled in an accept message for registration, wherein the request includes any one of: an attach request, a routing area update request, a tracking area update request, or a location update request.
16. The method of embodiment 15, wherein the rejecting includes rejecting a single device or a group of devices.
17. The method of any one of embodiments 15-16, wherein the transmission backoff period of time is signaled to the device by any one of: a non-access stratum message sent to a device that is already attached to the network; or a message sent to the device over a paging channel.
18. The method of any one of embodiments 15-17, wherein the device includes any one of: a MTC device; a device belonging to a specific group, wherein the specific group includes any one of: belongs to a specific user, is located in a specific cell, is located in a specific location area, is located in a specific registration area, is located in a specific tracking area, or supports a specific feature; or a time tolerant device, wherein a time tolerant device is a device whose data transmission is not real time and may be delayed.
19. The method of any one of embodiments 15-18, further including generating an additional backoff period of time by the MTC device in response to the backoff period of time ending.
20. A method for device prioritization in wireless communications includes receiving a request from a MTC device that is not time tolerant, wherein a time tolerant device is a device whose data transmission is not real time and may be delayed; on a condition that a network that received the request is near congestion, selecting a group of time tolerant devices that are currently attached to the network; notifying the time tolerant devices not to transmit; accepting the request from the non-time tolerant device; and notifying the time tolerant devices to resume transmission.

A1. A method for performing load balancing by a wireless transmit/receive unit (WTRU), comprising:
   evaluating a current cell load value; and
   on a condition that the current cell load value is greater than a predetermined threshold, performing load balancing by barring the current cell.
A2. The method according to embodiment A1, wherein the barring includes adding the current cell to a barred cell list for a predetermined period of time.
A3. The method according to embodiment A2, wherein the predetermined period of time corresponds to anyone of: a network provided value specifically for the WTRU, a barring time for barred cells, or a fraction of the barring time for barred cells.
A4. The method according to embodiment A1, wherein the current cell load value is determined by the WTRU and includes anyone of:
   a predetermined number of consecutive failed random access channel (RACH) access attempts;
   a predetermined number of consecutive RACH accesses m which a response is received but no resources are allocated;
   a predetermined number of a combination of failed RACH access attempts or RACH accesses in which a response is received but no resources are allocated;
   a predetermined number of consecutive contention resolution phase failures;
   a predetermined number of consecutive RACH failures, wherein a RACH failure includes a combination of failed RACH access attempts, RACH accesses in which a response is received but no resources are allocated, or contention resolution phase failures; or
   a predetermined number of RACH failures within a predetermined period of time.
A5. A wireless transmit/receive unit (WTRU), comprising:
   a processor configured to:
      evaluate a current cell load value; and
      on a condition that the current cell load value is greater than a predetermined threshold, perform load balancing by barring the current cell.
A6. A method for identifying a wireless transmit/receive unit (WTRU) as a machine type communication (MTC) device, comprising:
   sending an identifier from the WTRU to a network, wherein the identifier includes anyone of:
      a bit combination on a random access channel (RACH) transmission, including an establishment clause value;
      a bit in an LAPDm frame;
      a bit in an uplink radio link control/medium access control data block;
      a bit in an uplink radio link control/medium access control control block;
      an indicator in a packet resource request message;
      a combination of signature sequences in a RACH preamble;
      an indicator appended to an end of repeated signature sequences in the RACH preamble;
      a one slot MTC indication message; or
   an indicator in an acquisition response.
A7. A method for a wireless transmit/receive unit (WTRU) to identify itself as a machine type communication (MTC) device to a network, comprising: sending an identifier from the WTRU to a network, wherein the identifier includes anyone of:
   a bit combination on a random access channel (RACH) transmission, including an establishment clause value;
   a bit in an LAPDm frame;
   a bit in an uplink radio link control/medium access control data block;
   a bit in an uplink radio link control/medium access control control block;
   an indicator in a packet resource request message;
   a combination of signature sequences in a RACH preamble;
   an indicator appended to an end of repeated signature sequences in the RACH preamble;
   a one slot MTC indication message; or
   an indicator in an acquisition response.
A8. A method for restricting access by a set of devices to a network, comprising:
   barring the devices from a cell, wherein the barring includes anyone of:
      the cell broadcasting in system information that it is barred or reserved;
      the cell broadcasting that a specific access class of devices are barred; or
      a Node B sends an activation or deactivation order in the system information, and the devices determine whether to transmit based on the order.
A9. The method according to embodiment A8, wherein the set of devices includes anyone of:
   one or more machine type communication (MTC) devices;
   one or more devices belonging to a specific group, wherein the specific group includes anyone of: belongs to a specific user, is located in a specific cell, is located in a specific location area, is located in a specific registration area, is located in a specific tracking area, or supports a specific feature; or
   one or more time tolerant devices, wherein a time tolerant device is a device whose data transmission is not real time and may be delayed.
A10. A method for restricting access by a device to a network, comprising:
   limiting data transmission capabilities of the device, wherein the limiting includes anyone of:
      the network sending a predefined access time period to the device, wherein the device only transmits within the predefined access time period;
      limiting grants given to the device, on a condition that the device is time tolerant, wherein a time tolerant device is a device whose data transmission
      is not real time and may be delayed; or
      the device identifies itself to the network as being time tolerant, and the device receives a defer transmission instruction from the network.
A11. The method according to embodiment A10, wherein on a condition that the device attempts to transmit outside of the predetermined access time period, the network signals a new predetermined access time period to the device.
A12. The method according to embodiment A10, wherein the defer transmission instruction includes anyone of:
   a negative acknowledgement;
   an indication of when the device may reattempt transmission; or
   an updated predefined access time period.
A13. The method according to embodiment A10, wherein the predetermined access time period is sent to the device in response to a message received from the device, wherein the response includes anyone of:
   a general packet radio service attach accept message;
   a location update message;
   a direct transfer message;
   an Iu release command; or
   a paging command.
A14. The method according to embodiment A10, wherein the device includes any one of:
   a machine type communication (MTC) device;
   a device belonging to a specific group, wherein the specific group includes anyone of: belongs to a specific user, is located in a specific cell, is located in a specific location area, is located in a specific registration area, is located in a specific tracking area, or supports a specific feature; or
   a time controlled device, wherein a time controlled device is a device configured to transmit only during a predetermined access time period.
A15. A method for controlling congestion in wireless communications, comprising:
   on a condition that a congestion condition exists, signaling a device by any one of:
      rejecting an attach request or a connection request from the device;
      rejecting a location update request;
      signaling a backoff period of time to the device; or
      accepting a request from the device and imposing a transmission backoff period of time for the device, wherein the backoff period of time is signaled in an accept message for registration, wherein the request includes any one of: an attach request, a routing area update request, a tracking area update request, or a location update request.
A16. The method according to embodiment A15, wherein the rejecting includes rejecting a single device or a group of devices.
A17. The method according to embodiment A15, wherein the transmission backoff period of time is signaled to the device by anyone of:
   a non-access stratum message sent to a device that is already attached to the network; or
   a message sent to the device over a paging channel.
A18. The method according to embodiment A15, wherein the device includes any one of:
   a machine type communication (MTC) device;
   a device belonging to a specific group, wherein the specific group includes anyone of: belongs to a specific user, is located in a specific cell, is located in a specific location area, is located in a specific registration area, is located in a specific tracking area, or supports a specific feature; or
   a time tolerant device, wherein a time tolerant device is a device whose data transmission is not real time and may be delayed.
A19. The method according to embodiment A15, further comprising:
   generating an additional backoff period of time by the MTC device in response to the backoff period of time ending.
A20. A method for device prioritization in wireless communications, comprising:
   receiving a request from a machine type communication (MTC) device that is not time tolerant, wherein a time tolerant device is a device whose data transmission is not real time and may be delayed;
   on a condition that a network that received the request is near congestion, selecting a group of time tolerant devices that are currently attached to the network;
   notifying the time tolerant devices not to transmit;
   accepting the request from the non-time tolerant device; and
   notifying the time tolerant devices to resume transmission.

## Claims

1. A method for controlling cell congestion, the method comprising:
receiving a first indication from a wireless transmit/receive unit (WTRU) that indicates that the WTRU is a time tolerant device;
determining, via an eNodeB, a first access class of time tolerant devices and a second access class of non-time tolerant devices;
determining, via the eNodeB, that preventing one or more devices that belong to the first access class from accessing a cell can prevent the cell from experiencing congestion; and
sending a second indication to the WTRU that the first access class is barred from accessing the cell due to cell congestion.

2. The method of claim 1, wherein the second indication prevents the WTRU from attempting to camp on the cell.

3. The method of claim 1, further comprising determining that allowing the first access class to accessing the cell would not cause cell congestion.

4. The method of claim 1, further comprising determining that expanding cell access for the first access class would not cause cell congestion.

5. The method of claim 1, further comprising sending a third indication to the WTRU to notify the WTRU that the first access class is allowed to access the cell.

6. The method of claim 1, further comprising sending a third indication to the WTRU to notify the WTRU that cell access for the first access has expanded.

7. The method of claim 1, further comprising sending a third indication to the WTRU to notify the WTRU that the first access class is allowed to access the cell when it is determined that allowing the first access class to access the cell would not cause cell congestion.

8. An apparatus for controlling cell congestion, the apparatus comprising:
a memory, and;
a processor, the processor configured to:
receive a first indication from a wireless transmit/receive unit (WTRU) that indicates that the WTRU is a time tolerant device;
determine a first access class of time tolerant devices and a second access class of non-time tolerant devices;
determine that preventing one or more devices that belong to the first access class from accessing the cell can prevent the cell from experiencing cell congestion; and
send a second indication to the WTRU that the first access class is barred from accessing the cell due to congestion.

9. The apparatus of claim 8, wherein the second indication prevents the WTRU from attempting to camp on the cell.

10. The apparatus of claim 8, wherein the processor is further configured to determine that allowing the first access class to access the cell will not cause cell congestion.

11. The apparatus of claim 8, wherein the processor is further configured to determine that expanding cell access for the first access cell would not cause cell congestion.

12. The apparatus of claim 8, wherein the processor is further configured to send a third indication to the WTRU that the first access class is allowed to access the cell.

13. The apparatus of claim 8, wherein the processor is further configured to send a third indication to the WTRU that cell access for the first access class has been expanded.

14. The apparatus of claim 8, wherein the processor is further configured to send a third indication to the WTRU that the first access class is allowed to access the cell when it is determined that allowing the first access class to access the cell would not cause cell congestion.

15. The apparatus of claim 8, wherein the processor is further configured to send a third indication to the WTRU that the cell access for the first access class has been expanded when it is determined that expanding cell access for the first access class would not cause cell congestion.
